# FASCICULE DE BREVET EUROPEEN

(11) **EP 3 320 818 B1**
(45) Date de publication et mention de la délivrance du brevet: **05.06.2019**
(21) Numéro de dépôt: 17200254.5
(22) Date de dépôt: 07.11.2017
(51) Int. Cl.: A47J 36/16

(54) **DISPOSITIF DE TRAITEMENT D'ALIMENTS MUNI D'UN SYSTÈME DE FIXATION D'UN OUTIL**
VORRICHTUNG ZUR BEHANDLUNG VON LEBENSMITTELN, DIE MIT EINEM BEFESTIGUNGSSYSTEM FÜR EIN WERKZEUG AUSGESTATTET IST
FOOD-PROCESSOR DEVICE PROVIDED WITH A SYSTEM FOR ATTACHING A TOOL

(30) Priorité: 10.11.2016 FR 1660923
(43) Date de publication de la demande: 16.05.2018
(73) Titulaire: SEB S.A., 69130 Ecully (FR)
(72) Inventeur: LINGLIN, Benoît, 74370 SAINT MARTIN BELLEVUE (FR)
(74) Mandataire: Bourrières, Patrice

(56) Documents cités:
- GB-A- 2 129 322
- US-A- 160 033
- US-A- 2 805 843
- US-A- 5 863 121

## Description

La présente invention se rapporte au domaine technique général des dispositifs de traitement d'aliments disposés dans un récipient de cuisson, en particulier des dispositifs de traitement d'aliments destinés à coopérer avec plusieurs tailles de récipients de cuisson.

Il est connu des documents US2805843 et US5863121 de réaliser un dispositif de traitement d'aliments disposés dans un récipient de cuisson. Le dispositif décrit dans le document US2805843 comporte des moyens de fixation sur une paroi du récipient de cuisson qui permettent un accouplement/désaccouplement du dispositif sur la paroi du récipient de cuisson sans outil. Le dispositif comporte un arbre d'entrainement d'un outil rotatif destiné à coopérer avec lesdits aliments. L'outil rotatif est accouplé à une extrémité libre de l'arbre d'entrainement et peut être déplacé entre une première et une deuxième position de travail selon une direction radiale du récipient. L'extrémité libre comporte des vis qui coopèrent avec des ouvertures agencées dans l'outil. Ainsi, l'outil peut être positionné au plus près de la paroi pour bien traiter tous les aliments. Lorsque l'utilisateur adapte la position de l'outil par rapport à un récipient, les vis permettent après desserrage de déplacer l'outil pour le positionner au plus près de la paroi du récipient. Les vis permettent après serrage d'immobiliser l'outil par rapport à l'arbre d'entrainement.

Cependant, le serrage des vis par l'utilisateur peut être insuffisant et le maintien de l'outil sur l'arbre d'entrainement peut ne plus être assuré. A contrario, un serrage exagéré des vis par l'utilisateur va générer des difficultés pour desserrer les vis lors du réglage suivant.

Le but de la présente invention est de remédier aux inconvénients précités et de proposer un dispositif de traitement d'aliments qui présente une mise en oeuvre simple et ergonomique.

Un autre but de la présente invention est de proposer un dispositif de traitement d'aliments qui présente une conception simple et qui soit économique à mettre en oeuvre.

Ces buts sont atteints avec un dispositif de traitement d'aliments disposés dans un récipient de cuisson, le dispositif comportant des moyens de fixation sur le récipient de cuisson qui permettent un accouplement/désaccouplement du dispositif sur le récipient de cuisson et un arbre d'entrainement d'un outil rotatif destiné à coopérer avec les aliments, l'outil étant mobile transversalement à un axe vertical d'extension de l'arbre d'entrainement entre des première et deuxième positions de travail, l'outil rotatif comportant au moins des premier et deuxième logements de réception de l'arbre d'entrainement qui sont agencés côte à côte et qui s'étendent selon l'axe vertical, l'outil étant dans la première position de travail lorsque l'arbre d'entrainement est agencé dans le premier logement et l'outil étant dans une deuxième position de travail lorsque l'arbre d'entrainement est agencé dans le deuxième logement et en ce que l'outil est immobilisé sur l'arbre d'entrainement par des moyens de maintien permettant un montage/démontage de l'outil par rapport à l'arbre d'entrainement sans outillage.

L'outil rotatif comporte généralement une extension radiale à l'axe vertical dont une extrémité libre doit être positionnée au plus près de la paroi du récipient pour bien traiter tous les aliments. L'utilisateur peut, en fonction du récipient choisi, adapter facilement la bonne position de travail de l'outil sur l'arbre d'entrainement et ainsi positionner l'extension radiale au plus près de la paroi.

Avantageusement, le dispositif comporte des moyens de fixation sur le récipient de cuisson qui permettent un accouplement/désaccouplement par l'utilisateur du dispositif par rapport au récipient de cuisson sans outil.

De manière avantageuse, les premier et deuxième logements de réception de l'arbre d'entrainement s'étendent selon l'axe vertical.

Selon l'invention, l'arbre d'entrainement comporte une première portion dont la section transversale présente une forme non circulaire, chaque logement présentant une section transversale de forme complémentaire à la forme non circulaire.

On comprend que la première portion de l'arbre d'entrainement s'étend selon l'axe vertical et que chaque logement est destiné à recevoir la première portion dans les première ou deuxième positions de travail.

Ainsi, le mouvement de rotation de l'arbre d'entrainement est transmis sans glissement possible à l'outil rotatif dans la première ou dans la deuxième position de travail, tout en autorisant une translation de l'outil sur la première portion de l'arbre d'entrainement pour permettre un montage/démontage de l'outil par rapport à l'arbre d'entrainement.

De préférence, les premier et deuxième logements comportent des première et deuxième ouvertures latérales destinées à coopérer avec une deuxième portion de l'arbre d'entrainement qui présente une section transversale inférieure à la section transversale de la première portion.

Ainsi, pour assembler l'arbre d'entrainement dans un logement, l'utilisateur glisse la deuxième portion dans une ouverture latérale puis déplace l'outil vers le bas le long de l'axe vertical de l'arbre d'entrainement pour insérer la première portion dans le logement. On comprend que la première portion est adjacente à la deuxième portion.

Avantageusement, la première portion de l'arbre d'entrainement dont la section transversale présente une forme non circulaire comporte un épaulement qui coopère avec une première ou une deuxième face inférieure du premier ou du deuxième logement.

Une telle disposition permet d'obtenir une butée le long de l'axe vertical pour la mise en position de l'outil lors du mouvement d'insertion de la première portion dans un logement.

De préférence, les moyens de maintien comportent un élément de verrouillage mobile entre une position de maintien dans laquelle le premier ou le deuxième logement est maintenu en position sur l'arbre d'entrainement et une position de libération dans laquelle le premier ou le deuxième logement peut être désaccoupler de l'arbre d'entrainement.

Ainsi, le maintien ou la libération de l'outil par rapport à l'arbre d'entrainement sont réalisés de manière simple et économique par un élément de verrouillage mobile, l'élément de verrouillage pouvant être notamment déplacé par une action manuelle.

Avantageusement, l'élément de verrouillage est soumis à une force de rappel de la position de libération vers la position de maintien, notamment sous l'action d'un ressort.

Une telle disposition permet une construction particulièrement ergonomique, le retour en position de maintien de l'élément de verrouillage étant automatique. Cette disposition permet également de favoriser la position de maintien et d'éviter notamment sous l'action d'un choc la libération intempestive de l'élément de verrouillage.

De préférence, l'élément de verrouillage comporte au moins une bille et un ressort agencés sur l'arbre d'entrainement.

De manière avantageuse, l'arbre d'entrainement comporte une extrémité libre munie d'un organe de guidage et d'appui, ledit organe de guidage et d'appui comportant une face inférieure d'appui destinée à reposer de manière immobile sur un fond du récipient de cuisson.

Ainsi, l'arbre d'entrainement et par conséquent l'outil sont positionnés de manière précise par rapport au fond du récipient de cuisson pour garantir un traitement efficace de tous les aliments, notamment ceux disposés au plus près du fond.

De préférence, l'outil rotatif est monté coulissant le long de l'axe d'entrainement.

Ainsi, le dispositif peut s'adapter à plusieurs récipients de hauteurs différentes.

Avantageusement, le dispositif de traitement comporte un moteur mettant en rotation l'arbre d'entrainement et une source d'énergie.

Ainsi, l'outil est mis en rotation de manière automatique.

De préférence, l'arbre d'entrainement, le moteur et la source d'énergie forment un sous-ensemble et le dispositif comporte un châssis formant une poignée, solidaire des moyens de fixation sur le récipient, le sous-ensemble étant agencé de manière mobile sur le châssis.

Ainsi, l'arbre d'entrainement et par conséquent l'outil peuvent être positionnés au centre du récipient.

La poignée peut servir de moyen de maintien pour l'utilisateur qui veut déplacer le sous-ensemble et la poignée peut également servir de moyen de déplacement/manipulation du récipient de cuisson.

L'invention concerne également un ensemble formé par au moins deux récipients de cuisson de diamètres différents et un dispositif de traitement d'aliments tel que précédemment décrit.

L'invention sera mieux comprise à l'étude des modes de réalisation pris à titre nullement limitatif et illustrés dans les figures annexées dans lesquelles :
- La figure 1 illustre une vue en perspective d'un dispositif de traitement d'aliments agencé sur un récipient de cuisson de petit diamètre selon un mode particulier de réalisation de l'invention.
- La figure 2 illustre une vue en perspective du dispositif de traitement d'aliments illustré sur la figure 1, agencé sur un récipient de cuisson de grand diamètre.
- La figure 3 illustre une vue en perspective éclatée du dispositif de traitement d'aliments illustré sur la figure 2.
- La figure 4 illustre une vue en section selon la ligne IV-IV du dispositif de traitement d'aliments illustré sur la figure 2.
- La figure 5 illustre une vue de détail V du dispositif de préparation de boisson illustré sur la figure 4.
- La figure 6 illustre une vue en coupe selon la ligne VI-VI du dispositif de traitement d'aliments illustré sur la figure 3.
- La figure 7 illustre une vue de détail VII du dispositif de préparation de boisson illustré sur la figure 3.

On notera que, dans ce document, les termes «horizontal», «vertical», «inférieur», «supérieur», «longitudinal», «transversal», «haut», «bas», employés pour décrire le dispositif de traitement font référence à ce dispositif de traitement agencé sur un récipient en situation d'usage.

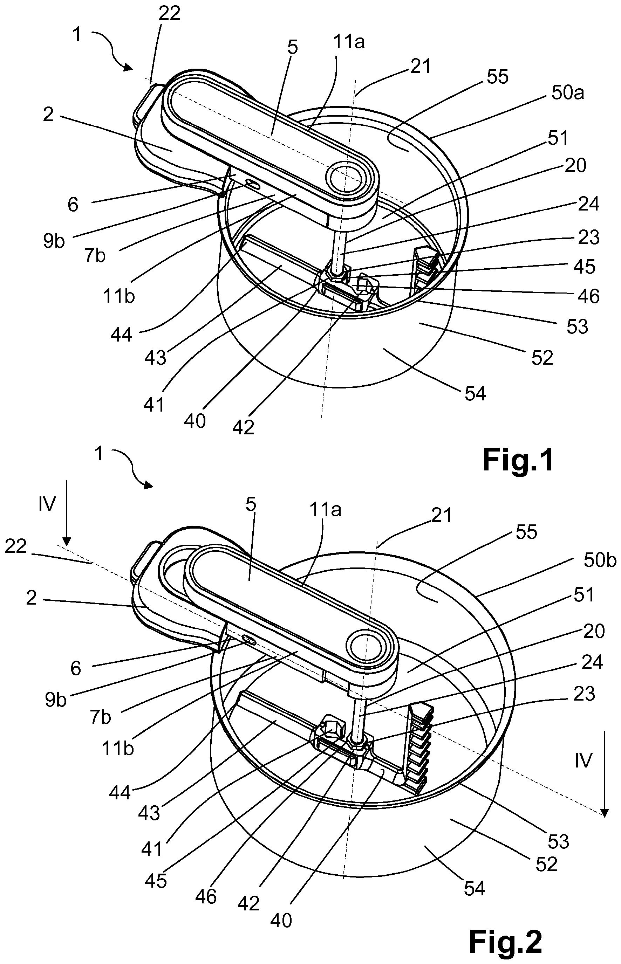

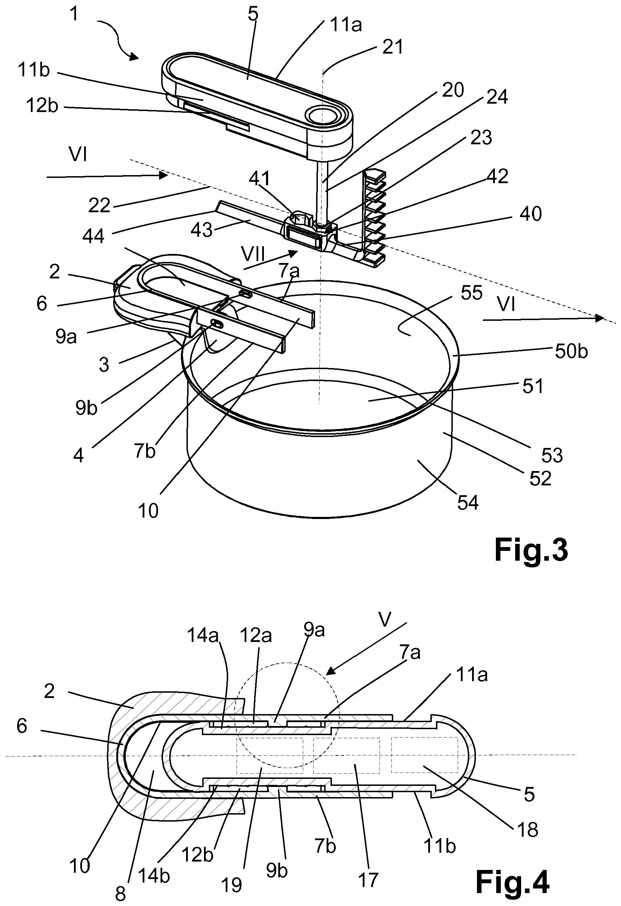

Dans l'exemple de réalisation représenté aux figures 1 à 3, un dispositif 1 de traitement des aliments est agencé sur un récipient 50a, 50b de cuisson. Le dispositif de traitement est un dispositif 1 de mélange et/ou de brassage. Le récipient de cuisson est une casserole 50a de diamètre 20 centimètres (Fig.1) ou est une casserole 50b de diamètre 22 centimètres (Fig.2 et 3). Chaque récipient 50a, 50b de cuisson comporte un fond 51 et une paroi 52 latérale qui est prolongée vers le haut par une portion recourbée 53 vers l'extérieur. Le dispositif 1 de traitement des aliments comporte un châssis 2 en forme de poignée. Le châssis 2 comporte des moyens de fixation du dispositif sur la paroi 52 et sur la portion recourbée 53. Les moyens de fixation comprennent un mors fixe 3 destiné à prendre appui sur une face externe 54 de la paroi 52 et un mors mobile 4 (Fig.3) destiné à prendre appui sur une face interne 55 de la paroi 52. Le mors mobile 4 est mobile entre une position fermée d'accouplement dans laquelle la paroi 52 est pincée et une position ouverte de désaccouplement. Les moyens de fixation comportent un mécanisme de déplacement du mors mobile 4 bien connu de l'homme du métier et décrit par exemple dans le document EP769263. Le dispositif 1 de traitement des aliments comporte un boitier 5 muni d'un arbre d'entrainement 20 d'un outil 40 rotatif. L'arbre d'entrainement 20 s'étend selon un axe vertical 21 et l'outil 40 rotatif est agencé à proximité du fond 51.

Le dispositif 1 de traitement des aliments comporte un mécanisme de coulissement du boitier 5 muni de l'arbre d'entrainement 20 par rapport au châssis 2 comprenant les moyens de fixation, selon une direction radiale 22 du récipient 50a, 50b. Le châssis 2 comporte une lame 6 repliée sur elle-même en forme de U et qui présente deux extrémités libres 7a, 7b. Le châssis 2 comprend une cavité 8 de réception de la lame 6. Les extrémités libres 7a, 7b s'étendent hors de la cavité 8 selon la direction radiale 22 au récipient 50a, 50b. Les extrémités libres 7a, 7b comportent chacune un tenon 9a, 9b agencé sur une face interne 10 de la lame 6, à l'intérieur du U. Chaque tenon 9a, 9b s'étend longitudinalement selon la direction radiale 22 au récipient 50a, 50b. Le boitier 5 s'étend longitudinalement selon la direction radiale 22 au récipient 50a, 50b. Le boitier 5 présente deux faces latérales 11a, 11b munies chacune d'une rainure 12a, 12b s'étendant selon la direction radiale 22 au récipient 50a, 50b. Le mécanisme de coulissement du boitier 5 par rapport au châssis comprend les tenons 9a, 9b qui sont agencés dans les rainures 12a, 12b.

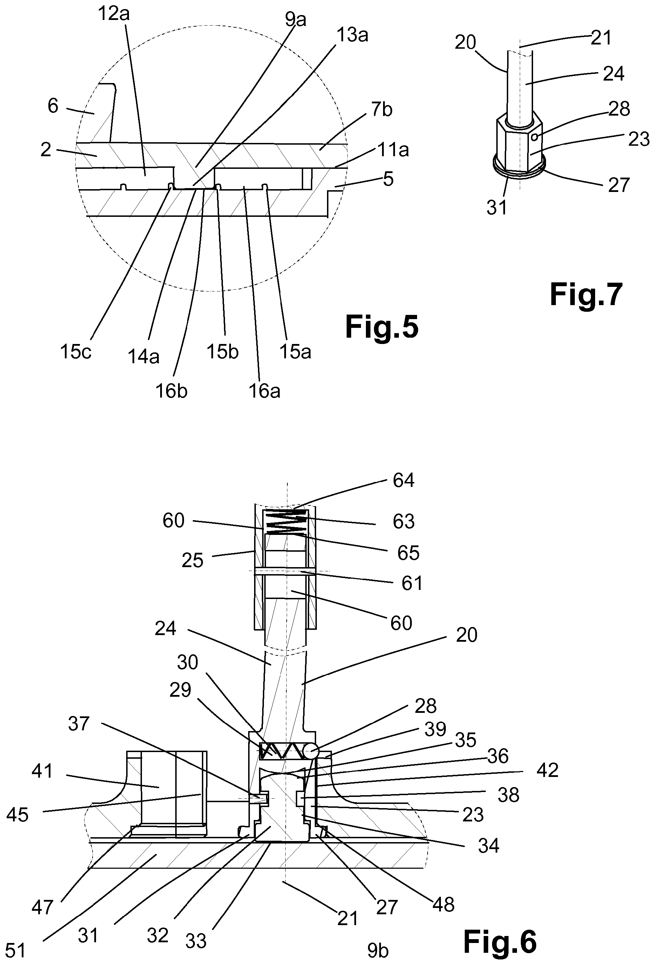

Le dispositif 1 de traitement des aliments comporte un système de blocage du mécanisme de coulissement du boitier 5 par rapport au châssis 2 dans au moins deux positions prédéterminées le long de la direction radiale 22. Chaque tenon 9a, 9b comprend une extrémité libre 13a, 13b et chaque rainure 12a, 12b comporte une paroi de fond 14a, 14b munie de protubérances 15a, 15b, 15c (Fig. 5). Deux protubérances 15a, 15b, 15c adjacentes et une portion de la paroi de fond 14a, 14b forment un logement 16a, 16b de réception de l'extrémité libre 13a, 13b. La lame 6 est réalisée en un matériau élastique. Les extrémités libres 7a, 7b qui portent les tenons 9a, 9b forment des éléments ressorts qui sont mobiles transversalement à la direction radiale 22 pour permettre aux tenons 9a, 9b de sortir de leur logement 16a, 16b respectif et passer dans un logement 16a, 16b adjacent. Ainsi, le système de blocage comporte les tenons 9a, 9b formant des organes de verrouillage mobiles entre une position de blocage dans laquelle le boitier 5 est maintenu en position par rapport au châssis 2 et une position de libération dans laquelle le boitier 5 peut coulisser par rapport aux châssis 2, chaque tenon 9a, 9b coopérant avec au moins deux logements 16a, 16b

Tel que visible à la figure 4, le boitier 5 comporte un moteur 17 et un mécanisme de transmission 18 pour mettre en rotation l'arbre d'entrainement 20 et l'outil 40 rotatif. Le boitier 5 comporte une source d'énergie 19 pour alimenter le moteur 17.

Conformément aux figures 1 et 2, l'outil 40 est mobile transversalement à l'axe vertical 21 d'extension de l'arbre d'entrainement 20 entre des première et deuxième positions de travail. L'outil 40 rotatif comporte des premier et deuxième logements 41, 42 de réception de l'arbre d'entrainement 20 qui sont agencés cote à cote. Les premier et deuxième logements 41, 42 de réception s'étendent selon l'axe vertical 21 et traversent de part en part l'outil 40. L'outil 40 est dans la première position de travail (Fig.1) lorsque l'arbre d'entrainement 20 est agencé dans le premier logement 41 et l'outil 40 est dans la deuxième position de travail (Fig.2) lorsque l'arbre d'entrainement 20 est agencé dans le deuxième logement 42. L'outil 40 comporte une extension radiale 43 munie d'une extrémité libre 44. Lorsque le dispositif 1 de traitement des aliments est agencé sur le récipient de cuisson qui est la casserole 50a de diamètre 20 centimètres, l'outil 40 est dans la première position de travail et l'extrémité libre 44 de l'extension radiale 43 est à proximité de la paroi 52 du récipient (Fig.1). Lorsque le dispositif 1 de traitement des aliments est agencé sur le récipient de cuisson qui est la casserole 50b de diamètre 22 centimètres, l'outil 40 est dans la deuxième position de travail et l'extrémité libre 44 de l'extension radiale 44 est toujours à proximité de la paroi 52 du récipient (Fig.2).

L'arbre d'entrainement 20 comporte une première portion 23 dont la section transversale à l'axe vertical 21 présente une forme hexagonale (Fig.7), les premier et deuxième logements 41, 42 présentant une section transversale de forme complémentaire à la forme hexagonale. Les premier et deuxième logements 41, 42 comportent des première et deuxième ouvertures latérales 45, 46 destinées à coopérer avec une deuxième portion 24 de l'arbre d'entrainement 20 qui présente une section transversale de forme circulaire. La section transversale de forme circulaire de la deuxième portion 24 est inférieure à une section circulaire dans laquelle s'inscrit la section transversale de la première portion 23.

Tel que visible à la figure 6, l'outil 40 est immobilisé sur l'arbre d'entrainement 20 par des moyens de maintien permettant un montage/démontage de l'outil 40 par rapport à l'arbre d'entrainement 20 sans outillage. La première portion 23 de l'arbre d'entrainement 20 présente une extrémité libre 31 qui comporte un épaulement 27 qui coopère avec une face inférieure 47, 48 du premier ou du deuxième logement 45, 46. Les moyens de maintien comportent un élément de verrouillage formé par une bille 28. La bille 28 est agencée dans un trou borgne 29 aménagé radialement dans l'arbre d'entrainement 20. La bille 28 est mobile entre une position de maintien dans laquelle le premier ou le deuxième logement 41, 42 est maintenu en position sur l'arbre d'entrainement 20 et une position de libération dans laquelle le premier ou le deuxième logement 41, 42 peut être désaccouplé de l'arbre d'entrainement 20. La bille 28 est soumise à une force de rappel de la position de libération vers la position de maintien sous l'action d'un ressort 30 agencé dans le trou borgne 29. La bille 28 est empêchée de sortir du trou borgne 29 par un rétreint de matière. La bille 28 coopère avec une cavité semi circulaire 39 de l'outil 40.

Conformément à la figure 6, l'arbre d'entrainement 20 comporte une extrémité libre 31 munie d'un organe de guidage et d'appui formé par un pion 32 cylindrique. Le pion 32 cylindrique comprend une face inférieure 33 reposant sur le fond 51 du récipient de cuisson. L'extrémité libre 31 de l'arbre d'entrainement 20 comporte un logement cylindrique 34 de réception du pion 32. Le pion 32 et le logement cylindrique 34 s'étendent verticalement le long de l'axe vertical 21. Le pion 32 cylindrique est mobile en rotation dans le logement cylindrique 34 pour former une liaison de type pivot glissant. Le pion 32 comporte une face supérieure 36 bombée qui coopère avec une paroi de fond 35 bombée du logement cylindrique 34 pour former un appui plan. Le pion 32 est donc lié à l'extrémité libre 31 de l'arbre d'entrainement 20 par une liaison du type pivot glissant avec appui plan.

L'extrémité libre 31 de l'arbre d'entrainement 20 comporte un ergot 37 s'étendant radialement vers l'intérieur du logement cylindrique 34. L'ergot 37 coopère avec une rainure périphérique 38 du pion 32. L'ergot 37 et la rainure périphérique 38 forment des moyens de maintien du pion 32 dans le logement cylindrique 34 de l'arbre d'entrainement 20 tout en autorisant la rotation du pion 32 dans le logement cylindrique 34.

L'arbre d'entrainement 20 comporte une troisième portion 25 solidaire du mécanisme de transmission. La troisième portion 25 comporte une cavité cylindrique 60 dans laquelle est agencée de manière coulissante la deuxième portion 24. La deuxième portion 24 comporte une ouverture transversale 61 de forme oblongue qui coopère avec un axe 62 agencé radialement sur la troisième portion 25. Un ressort de rappel 63 est agencé entre une paroi de fond 64 de la cavité cylindrique 60 et une face supérieure 65 de la deuxième portion 24. Le ressort de rappel 63 tend à rappeler les première et deuxième portions 23, 24 de l'arbre d'entrainement 20 ainsi que l'outil 40 dans une position basse de sortie. Ainsi, l'outil 40 rotatif est monté coulissant le long de l'axe vertical 21.

En fonctionnement, l'utilisateur qui veut adapter le dispositif 1 de traitement des aliments précédemment agencé sur une casserole 50a de diamètre 20 centimètres (Fig.1) sur une casserole 50b de plus grand diamètre, par exemple de diamètre 22 centimètres (Fig.2), va désaccoupler le dispositif 1 de la paroi 52 en déplaçant le mors mobile 4 dans la position ouverte de désaccouplement. Il va ensuite retirer le dispositif 1 et déplacer l'outil 40 transversalement à l'axe vertical 21 de la première position de travail à la deuxième position de travail. Pour ce faire, il va appliquer un effort sur l'outil 40 du bas vers le haut pour faire passer la bille 28 de la position de maintien à la position de libération et pour faire coulisser la deuxième portion 24 de l'arbre d'entrainement 20 dans le premier logement 41 en lieu et place de la première portion 23. L'utilisateur peut ensuite dégager radialement la deuxième portion 24 du premier logement 41 par l'ouverture latérale 45. Selon un processus inverse, l'utilisateur va assembler l'outil 40 dans la deuxième position de travail en positionnant la première portion 23 dans le deuxième logement 42.

L'utilisateur, en tenant le dispositif 1 par le châssis 2 en forme de poignée, va appliquer un effort sur le boitier 5 selon la direction radiale 22 pour faire passer les extrémités libres 13a, 13b des tenons 9a, 9b au dessus des protubérances 15b. Pour ce faire, les extrémités libres 7a, 7b de la lame 6 s'écartent et ainsi, les extrémités libres 13a, 13b des tenons 9a, 9b sortent de leur logement 16a respectif, les tenons 9a, 9b coulissent dans les rainures 12a, 12b et les extrémités libres 13a, 13b des tenons 9a, 9b se repositionnent dans leur logement 16b adjacent respectif. Les logements 16a, 16b sont agencés le long des rainures 12a, 12b au pas de un centimètre. Ainsi, lorsque l'utilisateur accouple le dispositif 1 sur une casserole de diamètre supérieur de deux centimètres, l'axe vertical 21 de l'outil d'entrainement 20 est aligné avec l'axe vertical de la casserole. De plus, les premier et deuxième logements 16a, 16b sont espacés de un centimètre. Ainsi, l'extrémité libre 44 de l'extension radiale 43 de l'outil 40 est positionnée à proximité de la paroi 52.

Pour accoupler le dispositif 1 sur la casserole 50b, l'utilisateur glisse le mors fixe 3 et le mors mobile 4 de part et d'autre de la paroi 52. La face inférieure 33 du pion 32 agencé à l'extrémité libre 31 vient en contact avec le fond 51 et la deuxième portion 24 de l'arbre d'entrainement 20 coulisse dans la troisième portion 25 pour permettre l'adaptation du dispositif 1 à la hauteur de la paroi 52. L'utilisateur peut alors déplacer le mors mobile 4 dans la position fermée d'accouplement. Enfin, l'utilisateur peut mettre en marche le moteur 17 pour entrainer l'arbre d'entrainement 20 et l'outil 40 en rotation. La face inférieure 33 du pion 32 repose de manière immobile sur le fond 51 pour garantir une bonne position de travail de l'outil 40 et un bon guidage en rotation de l'arbre d'entrainement 20.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation non représentée sur les figures l'élément de verrouillage comporte au moins un clip agencé sur l'arbre.

## Revendications

1. Dispositif (1) de traitement d'aliments disposés dans un récipient (50a, 50b) de cuisson, ledit dispositif (1) comportant des moyens de fixation (3, 4) sur ledit récipient (50a, 50b) de cuisson qui permettent un accouplement/désaccouplement dudit dispositif (1) sur le récipient (50a, 50b) de cuisson et un arbre d'entrainement (20) d'un outil (40) rotatif destiné à coopérer avec lesdits aliments, l'outil (40) étant mobile transversalement à un axe vertical (21) d'extension de l'arbre d'entrainement (20) entre des première et deuxième positions de travail, l'outil (40) rotatif comportant au moins des premier et deuxième logements (41, 42) de réception de l'arbre d'entrainement (20) qui sont agencés côte à côte, l'outil étant dans la première position de travail lorsque l'arbre d'entrainement (20) est agencé dans le premier logement (41) et l'outil (40) étant dans la deuxième position de travail lorsque l'arbre d'entrainement (20) est agencé dans le deuxième logement (42) et l'outil (40) étant immobilisé sur l'arbre d'entrainement (20) par des moyens de maintien (28, 39) permettant un montage/démontage de l'outil (40) par rapport à l'arbre d'entrainement (20) sans outillage, **caractérisé en ce que** l'arbre d'entrainement (20) comporte une première portion (23) dont la section transversale présente une forme non circulaire, chaque logement (41, 42) s'étendant selon l'axe vertical et présentant une section transversale de forme complémentaire à la forme non circulaire.

2. Dispositif (1) de traitement d'aliments selon la revendication 1, **caractérisé en ce que** les premier et deuxième logements (41, 42) comportent des première et deuxième ouvertures latérales (45, 46) destinées à coopérer avec une deuxième portion (24) de l'arbre d'entrainement (20) qui présente une section transversale inférieure à la section transversale de la première portion (23).

3. Dispositif (1) de traitement d'aliments selon la revendication 1 ou 2, **caractérisé en ce que** la première portion (23) de l'arbre d'entrainement (20) dont la section transversale présente une forme non circulaire comporte un épaulement (27) qui coopère avec une première ou une deuxième face inférieure (47, 48) du premier ou du deuxième logement (41, 42).

4. Dispositif (1) de traitement d'aliments selon l'une quelconque des revendications précédentes, **caractérisé en ce que** les moyens de maintien comportent un élément de verrouillage (28) mobile entre une position de maintien dans laquelle le premier ou le deuxième logement (41, 42) est maintenu en position sur l'arbre d'entrainement (20) et une position de libération dans laquelle le premier ou le deuxième logement (41, 42) peut être désaccoupler de l'arbre d'entrainement (20).

5. Dispositif (1) de traitement d'aliments selon la revendication 4, **caractérisé en ce que** l'élément de verrouillage (28) est soumis à une force de rappel de la position de libération vers la position de maintien, notamment sous l'action d'un ressort (30).

6. Dispositif (1) de traitement d'aliments selon l'une quelconque des revendications 4 ou 5, **caractérisé en ce que** l'élément de verrouillage comporte au moins une bille (28) agencée sur l'arbre d'entrainement (20).

7. Dispositif (1) de traitement d'aliments selon l'une quelconque des revendications précédentes, **caractérisé en ce que** l'arbre d'entrainement (20) comporte une extrémité libre (31) munie d'un organe de guidage et d'appui (32), ledit organe de guidage et d'appui (32) comportant une face inférieure (33) d'appui destinée à reposer de manière immobile sur un fond (51) du récipient (50a, 50b) de cuisson.

8. Dispositif (1) de traitement d'aliments selon l'une quelconque des revendications précédentes, **caractérisé en ce que** l'outil (40) rotatif est monté coulissant le long de l'axe vertical (21) d'extension de l'arbre d'entrainement (20).

9. Dispositif (1) de traitement d'aliments selon l'une quelconque des revendications précédentes, **caractérisé en ce qu'**il comporte un moteur (17) mettant en rotation l'arbre d'entrainement (20) et une source d'énergie (19).

10. Dispositif de traitement d'aliments (1) selon la revendication 9, **caractérisé en ce que** l'arbre d'entrainement (20), le moteur (17) et la source d'énergie (19) forment un sous-ensemble et le dispositif comporte un châssis (2) formant une poignée solidaire des moyens de fixation (3, 4) sur le récipient (50a, 50b), le sous-ensemble étant agencé de manière mobile sur le châssis (2).

## Patentansprüche

1. Vorrichtung (1) zum Verarbeiten von Lebensmitteln, die in einem Kochgefäß (50a, 50b) angeordnet sind, wobei die Vorrichtung (1) Mittel zum Befestigen (3, 4) auf dem Kochgefäß (50a, 50b) umfasst, die ein Ankoppeln/Abkoppeln der Vorrichtung (1) auf dem Kochgefäß (50a, 50b) ermöglichen, und eine Antriebswelle (20) eines drehenden Werkzeugs (40), das dazu bestimmt ist, mit den Lebensmitteln zusammenzuwirken, wobei das Werkzeug (40) quer zu einer vertikalen Erstreckungsachse (21) der Antriebswelle (20) zwischen ersten und zweiten Arbeitsstellungen beweglich ist, wobei das drehende Werkzeug (40) mindestens erste und zweite Aufnahmen (41, 42) zum Aufnehmen der Antriebswelle (20) umfasst, die nebeneinander eingerichtet sind, wobei sich das Werkzeug in der ersten Arbeitsstellung befindet, wenn die Antriebswelle (20) in der ersten Aufnahme (41) eingerichtet ist, und wobei sich das Werkzeug (40) in der zweiten Arbeitsstellung befindet, wenn die Antriebswelle (20) in der zweiten Aufnahme (42) eingerichtet ist, und wobei das Werkzeug (40) von Haltemitteln (28, 39) an der Antriebswelle (20) fixiert wird, die ein Anbauen/Abbauen des Werkzeugs (40) in Bezug auf die Antriebswelle (20) ohne Werkzeuge ermöglichen, **dadurch gekennzeichnet, dass** die Antriebswelle (20) einen ersten Abschnitt (23) umfasst, dessen Querschnitt eine unrunde Form aufweist, wobei sich jede Aufnahme (41, 42) entlang der vertikalen Achse erstreckt und einen Querschnitt von einer Form aufweist, die zur unrunden Form komplementär ist.

2. Vorrichtung (1) zum Verarbeiten von Lebensmitteln nach Anspruch 1, **dadurch gekennzeichnet, dass** die erste und zweite Aufnahme (41, 42) erste und zweite seitliche Öffnungen (45, 46) umfassen, die dazu bestimmt sind, mit einem zweiten Abschnitt (24) der Antriebswelle (20) zusammenzuwirken, der einen Querschnitt aufweist, welcher kleiner ist als der Querschnitt des ersten Abschnitts (23).

3. Vorrichtung (1) zum Verarbeiten von Lebensmitteln nach Anspruch 1 oder 2, **dadurch gekennzeichnet, dass** der erste Abschnitt (23) der Antriebswelle (20), dessen Querschnitt eine unrunde Form aufweist, einen Ansatz (27) umfasst, der mit einer ersten oder einer zweiten Unterseite (47, 48) der ersten oder der zweiten Aufnahme (41, 42) zusammenwirkt.

4. Vorrichtung (1) zum Verarbeiten von Lebensmitteln nach einem der vorstehenden Ansprüche, **dadurch gekennzeichnet, dass** die Haltemittel ein Verriegelungselement (28) umfassen, das zwischen einer Haltestellung, in der die erste oder die zweite Aufnahme (41, 42) an der Antriebswelle (20) in Position gehalten wird, und einer Freigabestellung beweglich ist, in der die erste oder die zweite Aufnahme (41, 42) von der Antriebswelle (20) abgekoppelt werden kann.

5. Vorrichtung (1) zum Verarbeiten von Lebensmitteln nach Anspruch 4, **dadurch gekennzeichnet, dass** das Verriegelungselement (28), insbesondere unter der Wirkung einer Feder (30), einer Rückstellkraft von der Freigabestellung zur Haltestellung hin unterliegt.

6. Vorrichtung (1) zum Verarbeiten von Lebensmitteln nach einem der Ansprüche 4 oder 5, **dadurch gekennzeichnet, dass** das Verriegelungselement mindestens eine Kugel (28) umfasst, die auf der Antriebswelle (20) eingerichtet ist.

7. Vorrichtung (1) zum Verarbeiten von Lebensmitteln nach einem der vorstehenden Ansprüche, **dadurch gekennzeichnet, dass** die Antriebswelle (20) ein freies Ende (31) umfasst, das mit einem Führungs- und Auflageglied (32) ausgestattet ist, wobei das Führungs- und Auflageglied (32) eine untere Auflageseite (33) umfasst, die dazu bestimmt ist, unbeweglich auf einem Boden (51) des Kochgefäßes (50a, 50b) zu ruhen.

8. Vorrichtung (1) zum Verarbeiten von Lebensmitteln nach einem der vorstehenden Ansprüche, **dadurch gekennzeichnet, dass** das drehende Werkzeug (40) entlang der vertikalen Erstreckungsachse (21) der Antriebswelle (20) verschiebbar angebracht ist.

9. Vorrichtung (1) zum Verarbeiten von Lebensmitteln nach einem der vorstehenden Ansprüche, **dadurch gekennzeichnet, dass** sie einen Motor (17), der die Antriebswelle (20) in Drehung versetzt, und eine Energiequelle (19) umfasst.

10. Vorrichtung zum Verarbeiten von Lebensmitteln (1) nach Anspruch 9, **dadurch gekennzeichnet, dass** die Antriebswelle (20), der Motor (17) und die Energiequelle (19) eine Teilbaugruppe bilden, und die Vorrichtung einen Rahmen (2) umfasst, der einen fest mit den Mitteln zum Befestigen (3, 4) auf dem Gefäß (50a, 50b) verbundenen Griff bildet, wobei die Teilbaugruppe auf dem Rahmen (2) beweglich eingerichtet ist.

## Claims

1. Device (1) for processing food arranged in a cooking vessel (50a, 50b), said device (1) comprising means for fastening (3, 4) on said cooking vessel (50a, 50b) which allow for a coupling/decoupling of said device (1) on the cooking vessel (50a, 50b) and a drive shaft (20) of a rotating tool (40) intended to engage with said food, the tool (40) being transversally mobile to a vertical axis (21) of extension of the drive shaft (20) between first and second working positions, the rotating tool (40) comprising at least first and second housings (41, 42) for receiving the drive shaft (20) which are arranged side by side, the tool being in the first working position when the drive shaft (20) is arranged in the first housing (41) and the tool (40) being in the second working position when the drive shaft (20) is arranged in the second housing (42) and the tool (40) being immobilised on the drive shaft (20) by retaining means (28, 39) that allow for a mounting/dismounting of the tool (40) with respect to the drive shaft (20) without tools, **characterised in that** the drive shaft (20) comprises a first portion (23) of which the transversal section has a non-circular shape, with each housing (41, 42) extending along the vertical axis and having a transversal section of a shape that is complementary with the non-circular shape.

2. Device (1) for processing food according to claim 1, **characterised in that** the first and second housings (41, 42) comprise first and second lateral openings (45, 46) intended to engage with a second portion (24) of the drive shaft (20) that has a transversal section less than the transversal section of the first portion (23).

3. Device (1) for processing food according to claim 1 or 2, **characterised in that** the first portion (23) of the drive shaft (20) of which the transversal section has a non-circular shape comprises a shoulder (27) that engages with a first or a second lower face (47, 48) of the first or of the second housing (41, 42).

4. Device (1) for processing food according to any preceding claim, **characterised in that** the retaining means comprise a locking element (28) that is movable between a retaining position wherein the first or the second housing (41, 42) is maintained in position on the drive shaft (20) and a released position wherein the first or the second housing (41, 42) can be decoupled from the drive shaft (20).

5. Device (1) for processing food according to claim 4, **characterised in that** the locking element (28) is subjected to a return force of the released position to the retaining position, in particular under the action of a spring (30).

6. Device (1) for processing food according to any of claims 4 or 5, **characterised in that** the locking element comprises at least one bead (28) arranged on the drive shaft (20).

7. Device (1) for processing food according to any preceding claim, **characterised in that** the drive shaft (20) comprises a free end (31) provided with a guiding and bearing member (32), said guiding and bearing member (32) comprising a lower bearing face (33) intended to rest in an immobile manner on a bottom (51) of the cooking vessel (50a, 50b).

8. Device (1) for processing food according to any preceding claim, **characterised in that** the rotating tool (40) is slidably mounted along the vertical axis (21) of extension of the drive shaft (20).

9. Device (1) for processing food according to any preceding claim, **characterised in that** it comprises a motor (17) that rotates the drive shaft (20) and a source of energy (19).

10. Device for processing food (1) according to claim 9, **characterised in that** the drive shaft (20), the motor (17) and the source of energy (19) form a subassembly and the device comprises a frame (2) that forms a handle integral with the means for fastening (3, 4) on the vessel (50a, 50b), with the subassembly being arranged in a movable manner on the frame (2).
